Europäisches Patentamt

European Patent Office

Office européen des brevets

(19)

(11) Numéro de publication : **0 220 087 B1**

(12) **FASCICULE DE BREVET EUROPEEN**

(45) Date de publication du fascicule du brevet :
02.01.91 Bulletin 91/01

(51) Int. Cl.⁵ : **G21F 9/22**, B65G 53/30

(21) Numéro de dépôt : **86402002.9**

(22) Date de dépôt : **12.09.86**

(54) Chaîne de transfert d'une suspension de particules en quantité constante en vue de leur conditionnement.

(30) Priorité : **18.09.85 FR 8513824**

(43) Date de publication de la demande :
**29.04.87 Bulletin 87/18**

(45) Mention de la délivrance du brevet :
**02.01.91 Bulletin 91/01**

(84) Etats contractants désignés :
**BE DE GB IT**

(56) Documents cités :
**DE-A- 2 853 086**
**GB-A- 2 027 131**

(72) Inventeur : **Hery, Yves**
**Résidence Anthony Real**
**F-84100 Orange (FR)**
Inventeur : **Moncouyoux, Jean-Pierre**
**Impasse des Amandines**
**F-30200 Bagnols sur Ceze (FR)**
Inventeur : **Mari, Lucien**
**298 rue de l'Etang**
**F-84100 Orange (FR)**

(74) Mandataire : **Mongrédien, André et al**
**c/o BREVATOME 25, rue de Ponthieu**
**F-75008 Paris (FR)**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

EP 0 220 087 B1

Jouve, 18, rue Saint-Denis, 75001 PARIS

## Description

La présente invention concerne une chaîne de transfert d'une suspension de particules en quantité constante, en vue de leur conditionnement.

L'invention s'applique au transfert dosé de toutes suspensions de particules et plus particulièrement d'une suspension de particules à fortes masses spécifiques.

L'invention s'applique par exemple dans le domaine du retraitement nucléaire, pour le transfert de suspensions de fines de dissolution et de cisaillage.

Les fines de dissolution et de cisaillage correspondent respectivement aux éléments chimiques du combustible nucléaire et aux éléments chimiques du matériau enveloppant ce combustible, insolubles dans les solutions utilisées pour la dissolution du combustible et de son enveloppe, lors du retraitement nucléaire. Une solution utilisée pour ce type de dissolution est par exemple l'acide nitrique.

Les fines de dissolution et de cisaillage constituent un déchet très radioactif nécessitant un conditionnement. Elles doivent donc être incorporées en quantités constantes dans une matrice, pour présenter de bonnes garanties de confinement. Pour ces raisons, les fines de dissolution et de cisaillage en suspension sont transférées en quantité constante vers des dispositifs de conditionnement appropriés, par une chaîne de transfert.

L'invention s'applique aussi au domaine du traitement d'effluents, notamment pour le transfert et l'échantillonnage de résines échangeuses d'ions saturées, ou encore au domaine de l'industrie chimique, pour le dosage par exemple d'additifs solides.

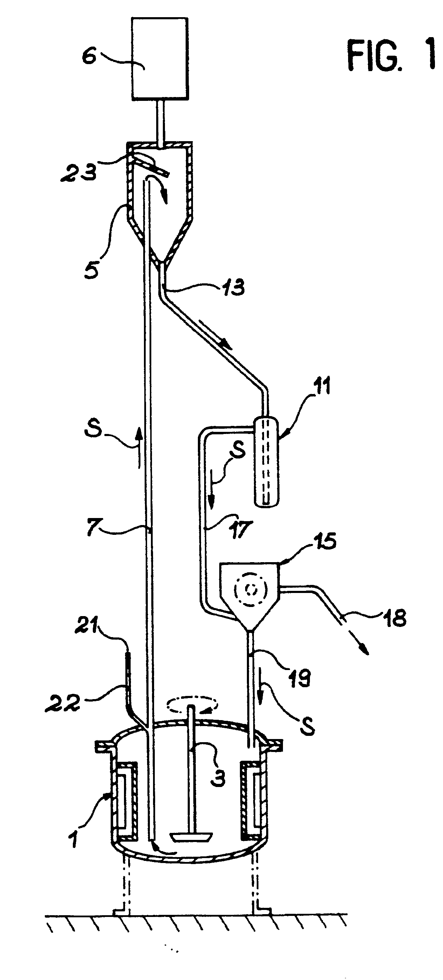

La figure 1 représente schématiquement une chaîne de transfert connue, permettant de transférer une suspension de particules, notamment une suspension de fines de dissolution et de cisaillage en quantité constante.

Cette chaîne de transfert comprend une cuve 1 munie de moyens d'agitation tel qu'un agitateur 3, un pot séparateur 5 disposé au dessus de la cuve 1 et relié à des moyens pour effectuer le vide, tel qu'une pompe à vide 6, une garde hydraulique 11 au-dessous du pot séparateur 5 et des moyens de prélèvement 15 entre la garde hydraulique 11 et la cuve 1.

On entend par partie inférieure d'un élément constituant la chaîne de transfert la partie la plus basse de cet élément par opposition à la partie supérieure représentant la partie la plus haute de cet élément.

Une canalisation 7 relie la cuve 1 au pot séparateur 5. L'extrémité supérieure de cette canalisation 7 pénètre dans le pot séparateur 5 par la partie inférieure de ce dernier. Un plan incliné 23, à l'intérieur du pot séparateur 5 est situé juste au-dessus de l'extrémité supérieure de la canalisation 7. La pente de ce plan incliné 23 décroît vers le centre du pot séparateur 5.

Cette canalisation 7 est reliée d'autre part à un conduit 22 d'insufflation d'air. La canalisation 7 reliée au conduit 22 d'insufflation d'air et le pot séparateur 5 relié aux moyens pour effectuer le vide constituent un système de remontée ("air-lift" en terminologie anglo-saxonne).

Une canalisation 13 relie l'extrémité inférieure du pot séparateur 5 à la garde hydraulique 11. La garde hydraulique 11 est un réservoir généralement cylindrique. L'extrémité inférieure de la canalisation 13 plonge dans cette garde hydraulique 11.

Une canalisation 17 relie la sortie de cette garde hydraulique 11 aux moyens de prélèvement 15.

Une canalisation 18, reliée aux moyens de prélèvement 15, permet d'évacuer la suspension prélevée par ces moyens 15 vers des dispositifs de conditionnement. La suspension non prélevée est évacuée par une canalisation 19 reliant l'extrémité inférieure des moyens de prélèvement 15 à la cuve 1.

La suite de la description permet de comprendre le fonctionnement de la chaîne de transfert représentée figure 1.

Le sens de déplacement de la suspension est représenté par une flèche S en trait fort.

La suspension de particules est introduite dans la cuve 1, où elle est homogénéisée par l'agitateur 3. Cette suspension homogénéisée monte par la canalisation 7 jusqu'au pot séparateur 5, reliée à la pompe à vide 6. Pour cela une insufflation d'air en 21 est effectuée dans la partie inférieure de la canalisation 7 par le conduit 22 reliée à la canalisation 7. L'insufflation d'air en 21 et la pompe à vide 6 permettent de faire monter la suspension de particules dans cette canalisation 7.

Lorsque la suspension de particules chargée de bulles d'air arrive dans le pot séparateur 5, celle-ci est projetée contre le plan incliné 23 et tombe vers le fond du pot séparateur 5. Par ailleurs, l'air est évacué vers des moyens pour faire le vide, tel que la pompe à vide 6 située au-dessus du pot séparateur 5. Ce pot 5 permet donc de séparer la suspension de l'air.

La suspension de particules débarrassée de l'air est alors évacuée vers la garde hydraulique 11 par la canalisation 13 reliée à l'extrémité inférieure du pot séparateur 5. La suspension de particules arrive directement dans le fond de la garde hydraulique 11 par cette canalisation 13, et elle est évacuée par l'extrémité supérieure de la garde hydraulique 11 reliée à la canalisation 17. Cette garde hydraulique présentant un niveau de suspension constant permet d'éviter une aspiration par exemple d'air ou de suspension notamment par les canalisations 17, 18, 19 en aval de la garde hydraulique et permet, d'autre part, d'assurer la montée dans de bonnes conditions de la suspension par la canalisation 7.

La suspension de particules est transférée de la garde hydraulique 11, aux moyens de prélèvement 15 par la canalisation 17. Ces moyens de prélèvement 15 permettent de prélever une quantité constante de suspension qui est évacuée par la canalisation 18, vers des dispositifs de conditionnement appropriés ; la suspension non prélevée retourne à la cuve 1 par la canalisation 19.

Le débit de la suspension de particules dans la chaîne de transfert est assuré par l'insufflation d'air, effectuée en 21, dans le conduit 22 relié à l'extrémité inférieure de la canalisation 7, et par la pompe à vide 6 reliée au pot séparateur 5.

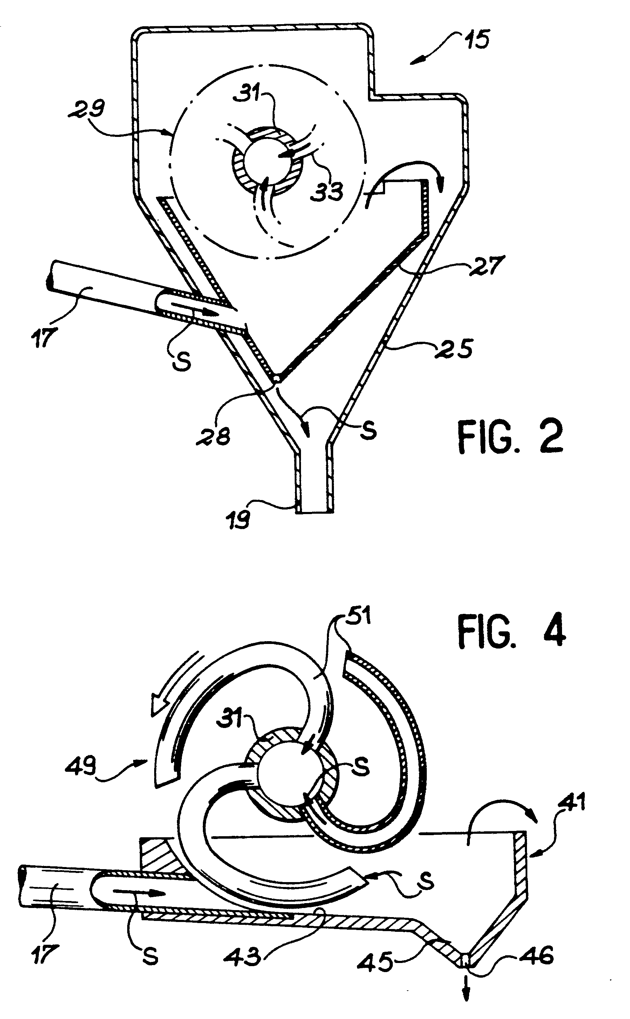

La figure 2 décrit de façon plus détaillée les moyens de prélèvement 15 d'une chaîne de transfert connue.

Ces moyens de prélèvement 15 comprennent un réservoir 25 à l'intérieur duquel est disposé un bac de prélèvement 27 et une roue 29 à godets doseurs 33.

La roue 29 ainsi que les godets doseurs 33 sont représentés en traits mixtes.

Le sens de déplacement de la suspension est représenté par une flèche S en trait fort.

Le réservoir 25 a une forme d'entonnoir. Il est relié par son extrémité inférieure à la tuyauterie 19 évacuant la suspension de particules vers la cuve 1.

Le bac de prélèvement 27 a également une forme d'entonnoir. Il comporte un orifice 28 d'évacuation à son extrémité inférieur. La tuyauterie 17 d'arrivée de la suspension de particules dans les moyens de prélèvement 15, est reliée latéralement au bac de prélèvement 27.

La roue 29 comprend plusieurs godets doseurs 33 incurvés, reliés symétriquement par rapport à un collecteur 31. Ce collecteur déverse la suspension prélevée dans l'extrémité supérieure de la canalisation 18. Ces godets doseurs sont répartis généralement dans différents plans. Ils sont formés de tubes, généralement métalliques. La forme de chaque godet 33 est obtenue en soudant plusieurs tubes entre eux; elle présente ainsi une courbure non continue.

La roue 29, de préférence à axe de rotation horizontal, est une roue à godets doseurs, mue en rotation par un moteur électrique non représenté.

Cette roue 29 est située, en partie, dans le bac de prélèvement 27, pour prélever lors de sa rotation une quantité constante de suspension de particules dans ce bac. Le niveau de suspension dans le bac 27 est maintenu constant par un débordement permanent de la suspension du bac 27. Par ailleurs, un orifice 28, aménagé au fond du bac ce prélèvement 27, permet l'évacuation de particules décantées vers la canalisation 19 reliée au réservoir 25. La suspension prélevée est évacuée par le collecteur 31 puis par la canalisation 18, vers des dispositifs appropriés de conditionnement.

Dans une chaîne connue de transfert d'une suspension de particules, les particules de forte masse spécifique se déposent et forment des sédiments dans les différents éléments de cette chaîne et en particulier dans le fond de la garde hydraulique, dans le bac de prélèvement, et au voisinage des soudures présentées par les godets doseurs. Ces dépôts ne permettent pas de prélever des quantités de suspension représentatives de la concentration initiale des particules au début de la chaîne de transfert. Ils peuvent même provoquer à la longue le bouchage des évacuations de la chaîne de transfert, notamment du bac de prélèvement.

Ces dépôts sont d'autant plus importants que la masse, la granulométrie et la densité des particules en suspension sont importantes. C'est le cas des fines de dissolution comprenant les éléments chimiques suivants : molybdène, technétium, ruthénium, rhodium, palladium, uranium et plutonium, ainsi que les fines de cisaillage comprenant du zircaloy ou de l'acier inoxydable. En effet, les éléments chimiques des fines de dissolution ont une masse spécifique allant de 6 à 20 unités de masse spécifique et une granulométrie allant jusqu'à 1,5 μm ; les éléments chimiques des fines de cisaillage ont une masse spécifique allant de 6 à 10 unités de masse spécifique et une granulométrie allant jusqu'à 100 μm. De plus, les fines de dissolution et de cisaillage étant radioactives, tout séjour de ces fines dans la chaîne de transfert représente un inconvénient important.

L'invention a pour objet de remédier à ces inconvénients et notamment d'éviter toute forme de dépôt de particules d'une suspension de particules dans la garde hydraulique et dans les moyens de prélèvement en réalisant notamment une turbulence permanente de la suspension.

De façon plus précise, l'invention a pour objet une chaîne de transfert d'une suspension de particules en quantité constante en vue de leur conditionnement comprenant :

– une cuve pour recevoir la suspension de particules,
– des moyens pour agiter ladite suspension dans la cuve et la rendre homogène,
– un pot séparateur au-dessus de la cuve, relié à l'extrémité supérieure d'une première canalisation et à des moyens pour faire le vide, la première canalisation permettant de faire monter la suspension de particules de la cuve au pot séparateur par insufflation d'air, ledit pot permettant de séparer l'air insufflé et la suspension de particules,
– une garde hydraulique au-dessous du pot séparateur reliée à celui-ci par une deuxième canalisation,
– des moyens de prélèvement au-dessous de la garde hydraulique, reliés à celle-ci par une troisième canalisation, lesdits moyens de prélèvement comprenant un bac de prélèvement et une roue à godets doseurs en rotation dans ledit bac, lesdits moyens de prélèvement permettant de prélever une quantité constante de suspension de particules en vue de leur conditionnement, une quatrième canalisation reliée aux moyens de prélèvement assurant l'évacuation de la suspension de particules non prélevées dans la cuve,

caractérisé en ce que la garde hydraulique et/ou les moyens de prélèvement comprennent des moyens pour éviter des dépôts de particules de la suspension de particules, comprenant :

– des ailettes de répartition reliées à un cône diffuseur disposé dans un fond en forme de cuvette de la garde hydraulique et à l'extrémité inférieure de la deuxième canalisation,

– une canalisation supplémentaire permettant une insufflation d'air à l'arrivée de la suspension de particules dans la garde hydraulique, à l'extrémité inférieure de la deuxième canalisation,

– un bac de prélèvement comportant un fond comprenant un orifice d'évacuation, l'extrémité inférieure de la troisième canalisation étant reliée tangentiellement au fond, et la roue à godets doseurs étant tangente audit fond plat,

– une roue à godets doseurs dont chaque godet est constitué par un tube unique de courbure continue, lesdits godets étant répartis sysmétriquement par rapport à un collecteur au centre de la roue et étant situés dans un même plan ou dans des plans parallèles, ledit collecteur permettant l'évacuation de la suspension de particules en vue de leur conditionnement.

Selon une variante de réalisation, le bac de prélèvement comporte un fond plat (43) ou concave (55); dans le cas où le fond est plat, ce fond est adjacent à un fond en forme d'entonnoir (45) dans lequel est placé l'orifice d'évacuation, le fond plat étant incliné vers cet orifice, et dans le cas où le fond est concave, il comporte une partie convexe (61) opposée à l'extrémité inférieure de la troisième canalisation (17), l'orifice (57) étant aménagé dans le fond concave au début de la partie convexe et d'axe vertical de ladite roue.

D'autres caractéristiques et avantages de l'invention ressortiront mieux de la description qui va suivre, donnée à titre purement illustratif et non limitatif. Cette description est faite en référence aux figures 1 à 5 annexées, dans lesquelles :

– la figure 1, déjà décrite, représente schématiquement une chaîne de transfert connue d'une suspension de particules,

– la figure 2, déjà décrite, représente schématiquement les moyens de prélèvement connus d'une chaîne de transfert,

– la figure 3 représente schématiquement un exemple de réalisation conforme à l'invention, d'une garde hydraulique d'une chaîne de transfert,

– la figure 4 représente schématiquement un exemple de réalisation conforme à l'invention, d'un bac de prélèvement et d'une roue à godets doseurs d'une chaîne de transfert, et

– la figure 5 représente schématiquement un autre exemple de réalisation conforme à l'invention d'un bac de prélèvement, d'une chaîne de transfert.

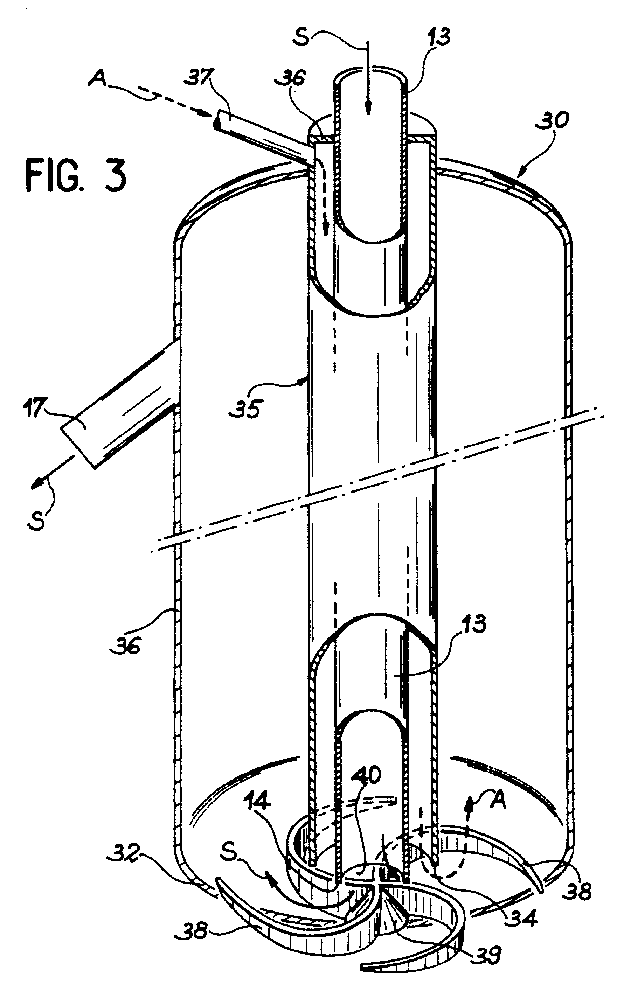

– La figure 3 représente schématiquement un exemple de réalisation d'une garde hydraulique conforme à l'invention comprenant des moyens pour éviter des dépôts de particules d'une suspension de particules dans le fond de la garde hydraulique.

La garde hydraulique 30 est un réservoir généralement cylindrique, dont le fond 32 forme une cuvette. A l'intérieur de cette garde hydraulique 30 pénètre la canalisation 13 reliant un pot séparateur 5 du type de celui décrit figure 1, à la garde hydraulique. Cette canalisation 13 permet d'amener directement au fond 32 de la garde hydraulique 30 la suspension de particules.

Au fond 32 de la garde hydraulique 30 sont disposées des ailettes de répartition 38, reliées à un cône diffuseur 39. Ces ailettes de répartition sont réparties symétriquement par rapport au cône 39 ; elles sont en général au nombre de quatre comme représenté sur cette figure. Chaque ailette est formée d'une lame, généralement métallique, courbée. La hauteur d'une ailette décroît du cône diffuseur jusqu'à la paroi 36 cylindrique de la garde hydraulique 30.

La canalisation 13 d'arrivée de la suspension est centrée sur le cône diffuseur 39 et repose sur ces ailettes de répartition 38. Un orifice d'éjection 40 est réalisé entre deux ailettes par l'extrémité inférieure 14 de cette canalisation 13.

Une canalisation 35 supplémentaire est disposée à l'intérieur de la garde hydraulique 30 et entoure la canalisation 13, de façon à créer un espace annulaire entre les parois cylindriques de la canalisation 13 et de la canalisation 35. L'extrémité supérieure 36 de la canalisation 35, située généralement à l'extérieur de la garde hydraulique 30, est fermée. La canalisation 35 est reliée hors de la garde hydraulique à une canalisation 37 dans laquelle est insufflé de l'air. L'extrémité inférieure 34 de la canalisation 35 est ouverte, l'extrémité inférieure 14 de la canalisation 13 étant plus basse que l'extrémité inférieure 34 de la canalisation 35, cette extrémité inférieure 34 ne repose pas sur les ailettes de répartition 38.

Ainsi, lorsque la suspension de particules, dont le sens de déplacement est représenté par une flèche S en trait fort, arrive dans le fond 32 de la garde hydraulique 30, par la canalisation 13, elle est évacuée par l'orifice d'éjection 40. Elle glisse ensuite sur le cône diffuseur 39, vers le fond 32 et épouse la forme des ailettes de répartition 38. La forme courbée de ces ailettes donne à la suspension un mouvement tourbillonnaire.

Le cône diffuseur 39 et les ailettes 38 permettent ainsi de réaliser une turbulence permanente dans la partie inférieure de la garde hydraulique 30.

De l'air, dont le sens de déplacement est représenté par une flèche A en pointillés, est insufflé dans la canalisation 37 reliée à la canalisation 35. Lorsque l'air arrive à l'extrémité inférieure 34 de la canalisation 35, cet air agit directement à la sortie de la suspension de la canalisation 13. Cette insufflation d'air permet de compléter l'efficacité du cône diffuseur 39 et des ailettes de répartition 38, en augmentant l'intensité de la turbulence.

La suspension de particules chargée d'air est alors évacuée par la canalisation 17 reliant latéralement l'extrémité supérieure de la garde hydraulique 30 aux moyens de prélèvement 15. Le niveau de la suspension dans la garde hydraulique est constant.

L'insufflation d'air brassant la suspension, ainsi que le cône diffuseur et les ailettes de répartition assurent une turbulence suffisante pour éviter des dépôts de particules et permettent ainsi de conserver l'homogénéité et la représentativité de la suspension entrant et sortant de la garde hydraulique.

Avec une telle garde hydraulique 30, des particules notamment d'acier, de taille inférieure ou égale à 100 μm, en suspension dans l'eau avec des teneurs allant de 5 à 50 g/l, peuvent circuler dans la garde hydraulique, avec des débits de l'ordre de 300 l/h sans qu'il y ait sédimentation.

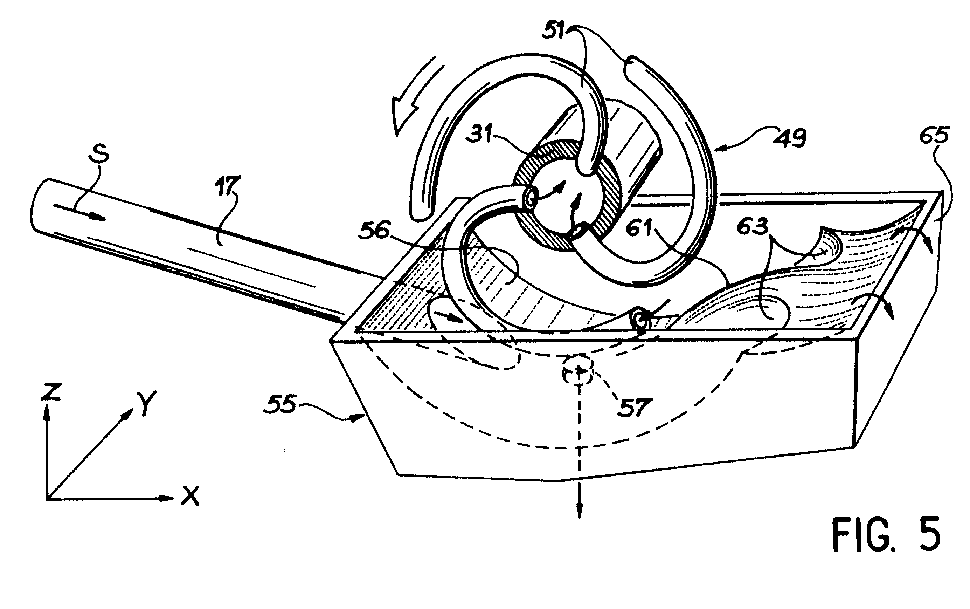

La figure 4 représente schématiquement un exemple de réalisation d'un bac de prélèvement et d'une roue à godets doseurs des moyens de prélèvement conformes à l'invention, permettant d'éviter des dépôts de particules d'une suspension de particules.

Le bac de prélèvement 41 et la roue 49 à godets doseurs 51, sont dans un réservoir 25 du même type que celui représenté figure 2.

Le bac de prélèvement 41 comprend un fond plat 43 adjacent à un fond 45 en forme d'entonnoir ; ce dernier comporte à son extrémité inférieure un orifice 46 d'évacuation. Le bac de prélèvement 41 a un volume inférieur aux bacs de prélèvement 27 de l'art antérieur.

Le fond plat 43 est incliné de quelques degrés, de l'ordre de 10°, par rapport à un plan horizontal. La pente de ce fond plat 43 décroît vers le fond 45. La canalisation 17, amenant la suspension de particules de la garde hydraulique aux moyens de prélèvement est reliée au bac de prélèvement 41, de façon que la suspension arrive tangentiellement au fond plat 43 au niveau le plus haut de sa pente.

La roue 49 à godets doseurs 51 a de préférence un axe de rotation horizontal. Elle est placée tangentiellement au fond plat 43. La roue 49 est mue en rotation par un moteur électrique (non représenté). Les godets doseurs 51 sont répartis symétriquement par rapport à un collecteur 31 auquel ils sont reliés. Ainsi, dans l'exemple de la figure, trois godets doseurs 51 sont représentés séparés les uns des autres d'un angle de 120°.

Le collecteur 31 déverse la suspension dosée dans l'extrémité supérieure de la canalisation 18, comme décrit figure 2, et permet l'évacuation de la suspension de particules vers des dispositifs de conditionnement appropriés.

Chaque godet doseur 51 est formé d'un tube unique, généralement métallique, de courbure continue. La courbure des tubes des godets peut être obtenue par cintrage.

Suivant la taille des particules en suspension et leur concentration dans le liquide de suspension, les godets doseurs varient en diamètre et en nombre. Par ailleurs, ils peuvent être répartis dans un même plan ou dans des plans juxtaposés.

Dans le cas de fines de cisaillage où la granulométrie moyenne peut atteindre 100 μm, trois godets doseurs 51 répartis dans un même plan sont généralement utilisés ; ils ont un diamètre de l'ordre de 10 mm.

Ainsi, lorsque la suspension de particules dont le sens de déplacement est représenté par une flèche S en trait fort, arrive dans le bac de prélèvement 41, par la canalisation 17, la roue 49 prélève avec chacun de ses godets 51, une quantité constante de suspension de particules. Du fait de la disposition de cette roue dans le bac 41, celle-ci prélève la suspension dans une zone de forte turbulence de la suspension. Cette zone correspond à l'arrivée de la suspension au fond du bac sur le fond plat 43. La suspension non prélevée est évacuée par l'orifice 46 et par débordement du bac 41, puis par la canalisation 19, représentée sur la figure 1, reliant le réservoir 25 à la cuve 1.

La forme plane du fond du bac 41, son faible volume, l'arrivée tangentielle de la suspension dans le fond du bac, ainsi que le prélèvement de la suspension dans une zone de forte turbulence permettent d'éviter des dépôts de particules dans le bac de prélèvement.

De même, la courbure continue de chaque godet doseur 51 permet d'éviter des dépôts de particules à l'intérieur de ces godets.

La figure 5 représente schématiquement un autre exemple de réalisation d'un bac de prélèvement conforme à l'invention permettant d'éviter des dépôts de particules d'une suspension de particules.

Ce bac de prélèvement 55 est dans un réservoir 25, du même type que celui représenté figure 2. A l'intérieur de ce bac de prélèvement, une roue 49 à godets doseurs 51 prélève une quantité constante de suspension ; cette roue 49 à godets doseurs conforme à l'invention est du même type que celle représentée figure 4.

Ce bac de prélèvement 55 a un volume inférieur aux bacs de prélèvement 27 connus. Il comprend un fond concave 56, ayant une partie convexe 61. Ce fond concave 56 présente une surface courbée suivant une première et une deuxième directions X, Z (horizontale et verticale) ; ce fond 56 présente en outre une surface plane dans la troisième direction Y de l'espace (horizontal). Le fond concave 56 et la partie convexe 61 permettent d'épouser la forme circulaire de la roue 49 disposée tangentiellement à ce fond concave 56 et à cette partie convexe 61. Un orifice d'évacuation 57 est aménagé dans le fond 56 suivant l'axe vertical de la roue 49, et à la naissance de la partie convexe 61.

La tuyauterie 17 d'arrivée de la suspension est reliée au bac 55, de façon que la suspension arrive tangentiellement au fond concave 56.

La partie convexe 61 est située à l'opposé de l'arrivée de la suspension par la tuyauterie 17. La hauteur de cette partie convexe 61, suivant la direction Z, croît à partir de l'orifice d'évacuation 57, jusqu'à l'extrémité supérieure du bac de prélèvement 55. L'épaisseur de cette partie convexe, suivant la direction Y, croît également à partir de l'orifice d'évacuation 57. Sur la paroi 65 opposée à l'arrivée de la suspension, la partie convexe 61 se raccorde avec le fond concave 56 par deux gouttières de forme arrondie 63, de part et d'autre de la partie convexe 61.

Ainsi, lorsque la suspension, dont le sens de déplacement est représenté par une flèche S en trait fort, arrive dans le bac de prélèvement 55, par la tuyauterie 17, la roue 49 à godets doseurs 51 prélève, comme décrit figure 4, une quantité constante de suspension. La suspension est prélevée directement à l'arrivée de celle-ci au fond du bac, dans une zone de forte turbulence. Cette turbulence est réalisée par le fait que la suspension est projetée sur les parois de la partie convexe 61 et revient vers le centre du fond concave 56, en suivant la forme des gouttières 63.

La suspension non prélevée est évacuée du bac 55 par débordement du bac 55 et par le trou 57, vers le réservoir 25 relié à la cuve 1 par la canalisation 19, représentée figure 1.

La forme du bac de prélèvement 55 ainsi que son faible volume permettent d'éviter des dépôts de particules dans le bac ; le prélèvement effectué par la roue à godets doseurs au fond du bac et à l'arrivée de la suspension dans ce bac, permet également d'éviter des dépôts de particules. Les prélèvements de suspension représentent bien les quantités initiales de particules en suspension au début de la chaîne de transfert.

Avec des bacs de prélèvement conformes à l'invention, comme ceux décrits sur les figures 4 et 5, des fines de cisaillage de granulométrie inférieure ou égale à 100 μm, en suspension, transitant dans ces bacs à des débits allant de 5 à 35 l/h, ne se déposent pas.

Les exemples de réalisation d'une garde hydraulique, d'un bac de prélèvement ainsi que d'une roue à godets doseurs, décrits précédemment, ne sont pas limitatifs. D'autres formes de bacs de prélèvement peuvent être notamment réalisées, afin d'éviter tous dépôts de particules. Par ailleurs, les formes géométriques des différents constituants de la garde hydraulique peuvent être différentes sans pour autant sortir du cadre de l'invention.

## Revendications

1. Chaîne de transfert d'une suspension de particules en quantité constante, en vue de leur conditionnement comprenant :
   - une cuve (1) pour recevoir la suspension de particules
   - des moyens (3) pour agiter ladite suspension dans la cuve et la rendre homogéne,
   - un pot séparateur (5) au-dessus de la cuve, relié à l'extrémité supérieure d'une première canalisation (7) et à des moyens (6) pour faire le vide, la première canalisation (7) permettant de faire monter la suspension de particules de la cuve (1) au pot séparateur (5) par insufflation d'air (21), ledit pot permettant de séparer l'air insufflé et la suspension de particules
   - une garde hydraulique (30) au-dessous du pot séparateur (5), reliée à celui-ci par une deuxième canalisation (13),
   - des moyens de prélèvement (15) au-dessous de la garde hydraulique (30), reliés à celle-ci par une troisième canalisation (17), lesdits moyens de prélèvement comprenant un bac de prélèvement et une roue à godets doseurs en rotation dans ledit bac, lesdits moyens permettant de prélever une quantité constante de suspension de particules en vue de leur conditionnement, une quatrième canalisation (19) reliée aux moyens (15) de prélèvement assurant l'évacuation d'une partie de la suspension de particules non prélevée dans lesdits moyens 15 dans la cuve 1, caractérisée en ce que la garde hydraulique (30) et/ou les moyens de prélèvement (15) comprennent des moyens pour éviter des dépôts de particules de la suspension de particules comportant :
   - des ailettes de répartition (38) reliées à un cône diffuseur (39) disposé dans un fond (32) en forme de cuvette de la garde hydraulique (30) et à l'extrémité inférieure de la deuxième canalisation (13),
   - une canalisation supplémentaire (35) permettant une insufflation d'air (37) à l'arrivée de la suspension de particules dans la garde hydraulique (30), à l'extrémité inférieure de la deuxième canalisation (13),
   - un bac de prélèvement (41, 55) comportant un fond (43, 61) comprenant un orifice d'évacuation (46, 57), l'extrémité inférieure de la troisième canalisation (17) étant reliée tangentiellement au fond (43, 61), et la roue (49) à godets doseurs étant tangente audit fond,
   - une roue (49) à godets doseurs (51) dont chaque godet est constitué par un tube unique, de courbure continue, lesdits godets étant répartis symétriquement par rapport à un collecteur (31) au centre de la roue et étant situés dans un même plan ou dans des plans parallèles, ledit collecteur permettant l'évacuation de la suspension de particules en vue de leur conditionnement.

2. Chaîne de transfert selon la revendication 1, caractérisée en ce que le bac de prélèvement comporte un fond plat (43) ou concave (55).

– Dans le cas ou le fond est plat, ce fond est adjacent à un fond en forme d'entonnoir (45) dans lequel est placé l'orifice d'évacuation, le fond plat étant incliné vers cet orifice et,

– dans le cas où le fond est concave, il comporte une partie convexe (61) opposée à l'extrémité inférieure de la troisième canalisation (17), l'orifice (57) étant aménagé dans le fond concave au début de la partie convexe et d'axe vertical de ladite roue.

## Ansprüche

1. Übertragungskette für ein Suspension von Teilchen in konstanter Menge im Hinblick auf Ihre Verarbeitung mit :

– einer Wanne (1) zum Aufnehmen der Teilchensuspension,

– einer Vorrichtung (3) zum Rühren der Suspension in der Wanne und zum Homogenisieren derselben,

– einem Trenntopf (5) oberhalb der Wanne, der mit dem oberen Ende eines ersten Kanals (7) und mit einer Vorrichtung zum Erzeugen eines Vakuums verbunden ist, wobei der erste Kanal (7) ermöglicht, die Teilchensuspension aus der Wanne (1) durch Einblasen von Luft (21) zum Trenntopf (5) aufsteigen zu lassen, wobei dieser Topf erlaubt, die eingeblasene Luft von der Teilchensuspension zu trennen,

– einem Hydraulikwächter (30) unter dem Trenntopf (5), der mit diesem über einen zweiten Kanal (13) verbunden ist,

– einer Anzapfvorrichtung (15) unter dem Hydraulikwächter, die mit diesem über einen dritten Kanal (17) verbunden ist, die einen Anzapfbehälter und ein Rad mit Dosierbechern, das sich In diesem Behälter dreht, umfaßt und die ermöglicht, eine konstante Menge der Teilchensuspension im Hinblick auf ihre Verarbeitung anzuzapfen, wobei ein vierter, mit der Anzapfvorrichtung (15) verbundener Kanal (19) das Ausleeren eines Teils der nicht in die Vorrichtung (15) angezapften Teilchensuspension in die Wanne (1) ermöglicht,

dadurch gekennzeichnet, daß der Hydraulikwächter (30) und/oder die Anzapfvorrichtung (15) eine Vorrichtung zum Vermeiden von Ablagerungen der Telichen der Teilchensuspension umfassen mit :

– Vertellungsflügeln (38), die mit einem Diffusionskegel (39), der an einem Boden (32) in der Kuvettenform des Hydraulikwächters (30) angeordnet ist, und dem unteren Ende des zweiten Kanals (13) verbunden ist,

– einem zusätzlichen Kanal (35), der ein Einblasen von Luft (37) bei der Ankunft der Teilchensuspension im Hydraulikwächter (30) ermöglicht, am unteren Ende des zweiten Kanals (13),

– einem Anzapfbehälter (41, 55) mit einem Boden (43, 61) mit einer Entleerungsöffnung (46, 57), wobei das untere Ende des dritten Kanals (17) tangential mit dem Boden (43, 61) verbunden ist und das Rad (49) mit Dosierbechern tangential zu dem Boden ist,

– einem Rad (49) mit Dosierbechern (51), wobei jeder Dosierbecher aus einer einzigen Röhre mit stetiger Krümmung besteht, wobei die Becher symmetrisch bezüglich eines Kollektors (31) in der Mitte des Rads angeordnet sind und sich in einer gleichen oder in parallelen Ebenen befinden, wobei der Kollektor das Entleeren der Teilchensuspension im Hinblick auf ihre Verarbeitung erlaubt.

2. Übertragungskette nach Anspruch 1, dadurch gekennzeichnet, daß der Anzapfbehälter einen flachen Boden (43) oder konkaven Boden (55) aufweist,

– wobei der Boden im Falle eines flachen Bodens an einen tonnenförmigen Boden (45) anliegt, in dem sich die Entleerungsöffnung befindet, wobei der flache Boden zu dieser öffnung geneigt ist, und

– wobei der Boden im Falle eines konkaven Bodens einen konvexen Teil (61) gegenüber dem unteren Ende des dritten Kanals (17) aufweist, wobei die Öffnung (57) in den konkaven Boden am Beginn des konvexen Tells und der vertikalen Achse des Rads gearbeitet ist.

## Claims

1. Transfert line for a suspension of particles in a constant quantity for the conditioning thereof and comprising a vessel (1) for receiving the particle suspension, means (3) for stirring said suspension in the vessel and for making it homogeneous, a separating tank (5) above the vessel, connected to the upper end by a first pipe (7) and to the means (6) for forming the vacuum, the first pipe (7) making it possible to raise the suspension of particles from the vessel (1) to the separating tank (5) by blowing in air (21), said tank making it possible to separate the blown in air and the particle suspension, a hydraulic guard (30) below the separating tank (5) and connected thereto by a second pipe and removal or sampling means (15) below the hydraulic guard (30) and connected thereto by a third pipe (17), said sampling means comprising a sampling tank and a dosing bucket wheel rotating in said tank, said means making it possible to sample a constant particle suspension quantity with a view to the conditioning thereof and a fourth pipe (19) connected to the sampling means (15) ensuring the discharge into the vessel (1) of part of the particle suspension not sampled in said means (15), characterized in that the hydraulic guard (30) and/or the sampling means (15), incorporate means for preventing the deposition of particles from the particle suspension, comprising distribution blades (38) connected to a diffuser cone (39) located in a cup-shaped bottom (32) of the hydraulic guard (30) and to the lower end of the second pipe (13), a sampling tank (41, 55) hav-

**EP 0 220 087 B1**

ing a bottom (43, 61) with a discharge orifice (46, 57), the lower end of the third pipe (17) being connected tangentially to the bottom (43, 61) and the dosing bucket wheel (49) is tangential to said bottom and a dosing bucket (51) wheel (49), whereof each bucket is constitued by a single tube with a continuous curvature, said buckets being distributed symmetrically with respect to a collector (31) in the centre of the wheel and being located in the same plane or in parallel planes, said collector permitting the discharge of the particle suspension with a view to the conditioning thereof.

2. Transfert line according to claim 1, characterized in that the sampling tank has a flat (43) or concave (55) bottom and in the case where the bottom is flat, the latter is adjacent to a funnel-shaped bottom (45) in which is located the discharge orifice, the flat bottom being inclined towards said orifice and in the case where the bottom is concave, it has a convex portion (61) opposite to the lower end of the third pipe (17), the orifice (57) being located in the concave bottom at the start of the convex portion and with an axis vertical to said wheel.

FIG. 1

FIG. 2

FIG. 4

FIG. 3

FIG. 5